# EUROPEAN PATENT APPLICATION

(11) **EP 4 751 847 A1**
(43) Date of publication of application: **03.06.2026**
(21) Application number: 25219731.4
(22) Date of filing: 01.12.2025
(51) Int. Cl.: B25B 21/00, B25B 23/147, G05B 19/4065

(54) **METHOD FOR MONITORING TOOL EVENTS WITH A DEVICE, COMPUTER PROGRAM AND DEVICE THEREFOR**

(30) Priority: 02.12.2024 SE 2430613
(71) Applicant: Atlas Copco Industrial Technique AB, 105 23 Stockholm (SE)
(72) Inventor: Barkefors, Annea, 13138 Nacka (SE); Aldenfalk Jansson, Staffan, 703 45 Örebro (SE); Nieto, Stephan, 11330 Stockholm (SE); Englin, Albin, 824 55 Hudiksvall (SE)
(74) Representative: Atlas Copco Industrial Technique AB

(57) **Abstract**

The present disclosure relates to a method of a device (20, 35) of monitoring events of a tightening tool (10), and a device (20, 35) performing the method. The method comprises computing (S104) a second derivative of a cumulative sum of events occurring for each of a number of event types, rescaling (S105) the computed second derivative such that a more severe event type is given a higher weight than a less severe event type, computing (S107) an updated wear score, up until a set upper value, when a current value of the rescaled computed second derivate for an event exceeds a first threshold value (S106), by adding the current value of the rescaled computed second derivate to a last computed wear score, and decrementing (S110) the wear score when the current value of the rescaled computed second derivate for an event falls below a third threshold value (S108) being set to be lower than the first threshold value.

## Description

### TECHNICAL FIELD

The present disclosure relates to a method of a device of monitoring events of a tightening tool, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

### BACKGROUND

Electrical tools, for instance tightening tools configured to tighten fasteners such as bolts or screws, issues alerts for different tool events occurring as the tool is in operation.

Some of the events may be warnings while some may be related to specific errors. Further, some of the events may indicate a severe tool occurrence which require immediate attention as such events e.g. may indicate that the tool has broken down. Certain events are occurring more frequently and can be difficult to act upon if they only occur once. Hence, it may in practice be challenging to draw conclusions from such occurring events.

### SUMMARY

One objective is to solve, or at least mitigate, this problem in the art and thus to provide an improved method of monitoring events occurring for a tightening tool.

This objective is attained in a first aspect by a method of a device of monitoring events of a tightening tool. The method comprises registering tool events occurring during a number of consecutive tightening operations being performed by the tool, the tightening operations being grouped in a plurality of groups, summing, for each individual tool event type, the number of events occurring in each group, computing a cumulative sum of the number of events occurring over the groups for each event type, and computing a second derivative of the cumulative sum of events occurring for each event type. The method further comprises rescaling the computed second derivative such that a more severe event type is given a higher weight than a less severe event type, computing an updated wear score, up until a set upper value, when a current value of the rescaled computed second derivate for an event exceeds a first threshold value, by adding the current value of the rescaled computed second derivate to a last computed wear score, and decrementing the wear score when the current value of the rescaled computed second derivate for an event falls below a third threshold value being set to be lower than the first threshold value.

This objective is attained in a second aspect by a device configured to detect that a tightening tool should be subjected to maintenance, the device comprising a processing unit operative to cause the device to register tool events occurring during a number of consecutive tightening operations being performed by the tool, the tightening operations being grouped in a plurality of groups, sum, for each individual tool event type, the number of events occurring in each group, compute a cumulative sum of the number of events occurring over the groups for each event type, and to compute a second derivative of the cumulative sum of events occurring for each event type. The device is further operative to rescale the computed second derivative such that a more severe event type is given a higher weight than a less severe event type, compute an updated wear score, up until a set upper value, when a current value of the rescaled computed second derivate for an event exceeds a first threshold value, by adding the current value of the rescaled computed second derivate to a last computed wear score, and to decrement the wear score when the current value of the rescaled computed second derivate for an event falls below a third threshold value being set to be lower than the first threshold value.

Advantageously, the wear score will increase or decrease depending on whether an acceleration or deceleration of event occurrences over time, thereby providing for a continuously updated wear score where high-impact events are given a higher weight than low-impact events. The wear score will thus make it easier to draw conclusions from occurring events.

In an embodiment, the rescaling is performed by multiplying the computed second derivative for the less severe event type with the first threshold value, and dividing said computed second derivative for the less severe event type with a second threshold value being set to be higher than the first threshold value.

In an embodiment, when the wear score reaches the upper set value and the rescaling the computed second derivative is positive, each addition is given a lesser weight as compared to the additions performed when the maximum set value has not been reached.

In an embodiment, when the wear score reaches the upper set value and the rescaling the computed second derivative is not positive, the updated wear score is computed by adding the current value of the rescaled computed second derivate to the last computed wear score.

In an embodiment, said third threshold value is configured to be set to be a negative fraction of the first threshold value.

In an embodiment, the decrementing of the wear score is performed in fixed steps.

In an embodiment, the wear score is being decremented to a minimum value of 0.

In an embodiment, a tool maintenance alert is provided upon the wear score reaching the set upper value for a certain event type.

In an embodiment, a tool maintenance alert is provided upon a combination of the wear scores for different event types reaching the set upper value for a certain event type.

In an embodiment, the current wear score is continuously presented for each individual tool event to an operator of the tool.

In an embodiment, the computed cumulative sum for each event type is filtered prior to computing the second derivative.

In an embodiment, the wear score is initially set to zero.

In a third aspect, a computer program is provided comprising computer-executable instructions for causing a device to perform steps recited in the method of the first aspect when the computer-executable instructions are executed on a processing unit included in the device.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a tightening tool configured to apply a torque to a fastener, in which tool embodiments may be implemented;
Figure 2 shows a flowchart illustrating a method of monitoring tools events according to an embodiment; and
Figure 3 illustrates computing a cumulative sum for occurring tool events of particular event types according to an embodiment; and
Figure 4 shows a state machine illustrating a method of monitoring tools events according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

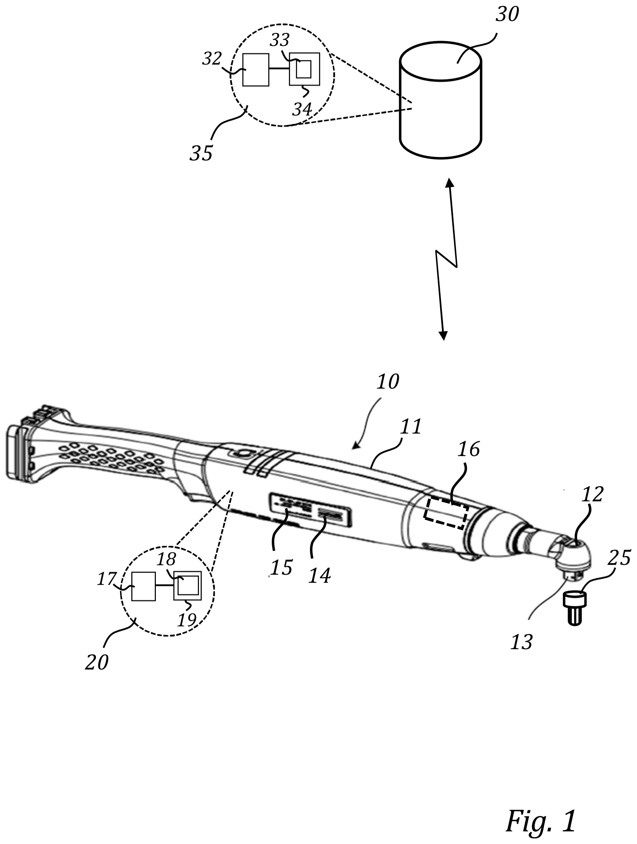

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor 16 arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be equipped with a communication device in the form of a radio transmitter/receiver (not shown) for wirelessly transmitting operational data, such as applied torque, angles and/or current consumption to a remotely located controller such as a cloud server 30 or a device such as a server executing on the premises. Alternatively, communication between the tool 10 and the controller 30 may be undertaken via a wired connection.

Thus, the tool 10 may for instance communicate measured operational data to the controller 30 for further evaluation while the controller 30 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18, 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 is in communicative connection with one or more internal sensors (not shown) for measuring the torque applied to the bolt 25 and a rotation angle of the output shaft 13 of the tightening tool 10 upon applying the torque, as well as a sensor measuring current consumption of the tool 10.

The control device 20 of the tool 10 itself (or even the control device 35 of the cloud server 30) issues alerts for different tool events occurring as the tool 10 is in operation. For instance, these tool events may be presented on the display 14 of the tool 10.

As previously mentioned, some of the events may be warnings while some may be related to specific errors. Further, some of the events may indicate a severe tool occurrence which require immediate attention as such events e.g. may indicate that the tool has broken down. Certain events are occurring more frequently and can be difficult to act upon if they only occur once, which makes it challenging to draw conclusions from such occurring events in practice.

In an embodiment, a method is proposed which targets detection of the latter type of event occurring. The method may further in some embodiments allow recommendation of an appropriate action to be taken upon detecting a significant increase in the occurrence of a specific event, such as e.g. alerting an operator of the tool to perform maintenance session on the tool 10.

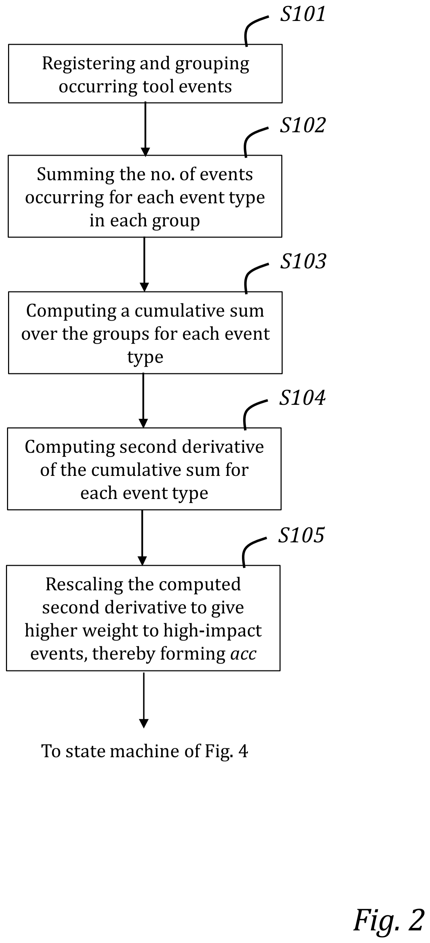

Figure 2 shows a flowchart illustrating a method of a device - such as any of control devices 20, 35 - of monitoring events of the tightening tool 10 according to an embodiment. In the example below, the control device 20 of the tool 10 is assumed to perform the steps of the method.

Ultimately, a wear score will be computed for the tool 10 based on occurring tool events. This wear score indicates the condition of tool 10, where a score of 0 implies that there are no issues with the tool and a score of, say, 100 indicates that the tool requires maintenance.

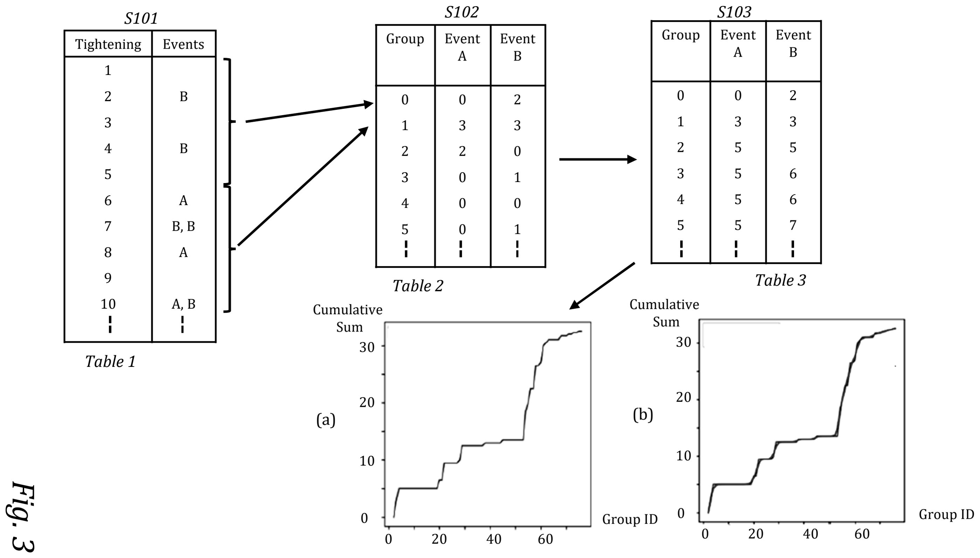

Reference will further be made to Figure 3 showing registering S101 of issued tool events and subsequent grouping of the events (Table 1), summing S102 of the events occurring for each event type (Table 2) and accumulating S103 the occurring events over all groups (Table 3) to create a cumulative sum for each event type, according to an embodiment.

In a first step S101, the control device 20 registers tool events occurring during a number of consecutive tightening operations being performed by the tool, where the tightenings being performed are grouped in a plurality of groups. In the example of Figure 3, as shown in Table 1, each group is illustrated for reasons of brevity to comprise five consecutive tightenings. However, in practice, each group will be configured to comprise far more tightenings, such as e.g. 800-1000 consecutive tightenings.

As shown in Table 1, event type B occurs during tightening no. 2, event B again occurs during tightening no. 4, event type A occurs during tightening no. 2, and so on. It should be noted that that one single tightening may comprise several event types (e.g. tightening no. 10), and a tightening may further comprise more than one event of the same type per type (e.g. tightening no. 7).

In S102, for each individual tool event type (in this example A and B), the number of events occurring in each group are summed. This is illustrated in Table 2 of Figure 3, where for group no. 0 consisting of the five first tightenings, event type B has occurred twice, for group no. 1 consisting of the next five tightenings, event type A and B both occurs three times, and so on.

These summed events are accumulated in S103 over all groups as shown in Table 3 by means of computation of a cumulative sum of events occurring over all groups, where for group no. 0, event type B has occurred twice while group no. 1 comprises of three event types A and five event types B after the accumulation of the summed events, and so on.

The lower left-hand graph (a) illustrates the result of the accumulation of events shown in Table 3 for event type A, i.e. graph (a) illustrates the cumulative sum for event A occurring over the tightening groups (in this example range from group no. 0 to group no. 75). Thus, the cumulative sum of events computed in S103 creates a cumulative trend of how often each event type occurs.

In practice, the cumulative sum may have to be filtered for smoothing purposes such that any sudden changes are filtered out, thereby resulting in lower righthand graph (b). Advantageously, noise or sudden spikes occurring in the cumulative sum data are removed. Any appropriate filter or smoothing technique may be used for this purpose, for instance a low-pass Butterworth filter applied twice (forwards and backwards) to remove phase shifts caused by filtering.

Then in S104, the control device computes a second derivative of the accumulated summed number of events occurring for each event type, i.e. the second derivative of the cumulative sum of events illustrated in Table 3 and graph (a) (or preferably the smoothed version of (b)). The computation of the second derivate of the cumulative sum in S104 enables tracking the rate of change of each (smoothed) cumulative sum.

The computation of the second derivative of the smoothed cumulative sum data for each event type in S104 is thus advantageous in that the second derivative indicates the acceleration or deceleration of event occurrences over time, which facilitates the identifying of rapid increases in certain event types.

Now, the events occurring may have different impact on the wear of the tool 10. For instance, some of the occurring events may e.g. be considered to have no impact, while others have "low impact" and yet others have "high impact" in terms of tool wear, where typically any events being considered to have no impact will be disregarded, which effectively results in two categories: "low impact" and "high impact". This categorizing of the event types into different severity categories is be taken into consideration upon computing the wear score in that a high-impact event will be given a higher weight as compared to a low-impact event. In other words, a high-impact event will contribute more to the wear score than a low-impact event. As is understood, further categories may be utilized in practice.

To achieve this, the control device 10 rescales, in S105, the second derivative being computed in S104 for the cumulative sum of each event type, such that a more severe event type is given a higher weight than a less severe event type. The severity of an event may be decided in several ways, e.g. by input from experts and data analysis.

For instance, assuming that a first threshold value t1 is set for the high-impact events (e.g. event type B), meaning that the result of the computed second derivative must exceed the first threshold value t1 for a high-impact event for the wear score to be increased, while a higher second threshold value t2 is set for the low-impact events (e.g. event type A), which implies that the result of the computed second derivative must exceed the higher set second threshold value t2 for a low-impact event for the wear score to be increased.

The rescaling in S105 may e.g. be performed by the control device 20 rescaling the computed second derivative for the low impact events as (x * t1/t2), which advantageously reduces the weight of the occurring low-impact events upon subsequently computing the wear score. For instance, if the second threshold value t2 is set to be twice the first threshold value t1, then the low-impact events are given half the weight of the high-impact events, or in other words: twice as many low-impact events must occur to have the same impact on the wear score as the high-impact events.

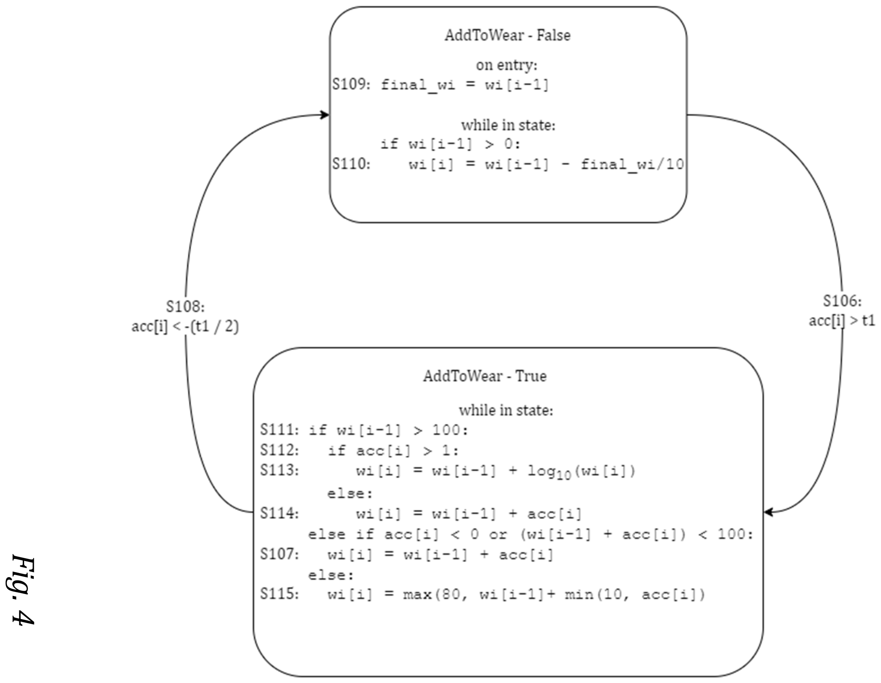

The rescaled second derivative being the output of S105 will be referred to as *acc* and will be supplied to a state machine for computing the wear score *wi,* as now will be described with reference to Figure 4.

Figure 4 illustrates a state machine according to an embodiment for computing the wear score wi of the tool 10.

As illustrated, the state machine has two main states: "AddToWear - False" and "AddToWear - True", where the wear score wi is being added to in the lower state ("True") while in the upper state ("False") the wear score wi is gradually decreased.

Now, initially the upper state will be entered with the wear score w[i-1] set to zero. As is understood, the state machine will remain in the upper state where the wear score wi is not updated until the rescaled second derivative acc[i] exceeds the set first threshold value t1 in S106, which serves as a transition to the lower state.

Upon entering the lower state, since at this stage the wear score wi[i-1] = 0 and acc[i] > 0, the computation at S107 will be undertaken where an updated wear score wi[i] is computed as w[i] = wi[i-1] + acc[i]. In other words, the wear score will be updated by adding a current value of the rescaled computed second derivate acc[i] to a last computed wear score wi[i-i].

As long as acc[i] is positive, which indicates acceleration of event occurrences over time, the wear score wi[i] updated in S107 (as long as an upper value of 100 is not reached for the wear score) will steadily increase since a new current value of acc[i] continuously is added to the last updated wear score wi[i-1].

In contrast, should acc[i] turn negative, thereby indicating deceleration of event occurrences over time, the wear score wi[i] will steadily decrease since a new negative current value of acc[i] continuously is added to the last updated wear score wi[i-1].

Further, if acc[i] decreases below a third threshold value t3 (in the example of Figure 4 being set to -t1/2, i.e. t3 = -t1/2), the state machine transitions back in S108 to the upper state where upon entry of the state a parameter final_wi is set to the last updated wear score wi[i-1] in S109, and as long as the wear score wi[i-1] exceeds zero, the control device continuously updates the wear score w[i] by subtracting from the last updated wear score wi[i-1] a preconfigured value in S110, which in this case amounts to the parameter final_wi divided by a factor 10. As is understood, other appropriate configured values may be envisaged to be subtracted from the last updated wear score wi[i-1] to generate an updated wear score wi[i].

Thus, the wear score wi will increase or decrease depending on whether acc[i] indicates an acceleration or deceleration of event occurrences over time, thereby advantageously providing for a continuously updated wear score wi[i] where high-impact events are given a higher weight than low-impact events.

The rescaling of the computed second derivative in S105 for low-impact events is further advantageous in that more low-impact events are required before even starting to add to the wear score. The rescaling advantageously has a twofold effect; firstly, it takes longer time for the low-impact events occurring to reach the first threshold value t1 to start adding to the wear score and secondly each addition acc[i] to the wear score will be lower.

Again with reference to the lower state of the state machine of Figure 4, in an embodiment, assuming that in S107 the current value acc[i] of the rescaled second derivative remains positive, thereby indicating an acceleration of event occurrences over time, the wear score w[i-1] will ultimately reach an upper set wear score value of 100 in S111 which may indicate that the tightening tool 10 should be taken out of production for being subjected to maintenance. To this effect, an alert may be provided to an operator of the tool 10 accordingly, possibly along with an indication of the event type causing the alert. Thus, when the wear score reaches the upper wear score value of 100 for an individual event type (e.g. event type B), an alert may be provided accordingly to the operator of the tool 10.

Advantageously, in order to avoid the wear score continuously increasing to a same extent as previously (i.e. in S107), the control device 20 may (as long as acc[i] remains positive as determined in S112) compute an updated wear score wi[i] in S113 by adding e.g. the logarithm of acc[i] to the last updated wear score wi[i-1] in order to avoid an aggressive increase of the wear score wi[i]. Should acc[i] be determined to be negative in S112, the updated wear score wi[i] will be computed in S114 in the same manner as previously was performed in S107.

In a further optional embodiment illustrated in S115 with the very last else-clause in the lower state of Figure 4, to avoid increasing the wear score w[i] too aggressively, w[i] is set to the maximum of 80 and wi[i-1] + min(10, acc[i]).

As regards the wear score wi, a number of embodiments are envisaged for alerting an operator of the tool 10 that maintenance of the tool is required.

In one embodiment, a wear score wi of 100 does not necessarily have to be reached for an individual event type for a maintenance alert to be provided. Rather, individual wear scores computed for different event types may be combined to one overall wear score. For example, assuming that a wear score of 80 is reached for event type B while a wear score of 20 is reached for event type A; an alert may then be provided since the sum of the two individual wear scores amount to 100, along with the contribution of each individual event type to the overall wear score, i.e. event type B contributing with 80% while event type A contributes with 20%.

In an embodiment, the wear score is reset to zero once the tool has been subjected to maintenance. In other words, the wear score will initially be zero when the method according to embodiments commences.

In a further embodiment, a trained machine-learning (ML) model or artificial intelligence (AI) may be used to detect occurring tool events.

Any such ML and/or AI operations for performing of the steps of the method according to embodiments may be performed locally by the control device 20, or by the cloud server 30. The determining of whether or not maintenance should be performed may be immediately communicated to the operator of the tool 10 via e.g. the display 14.

It is envisaged that the steps of the method according to embodiments may be performed by the control device 20 arranged in the tool 10 itself. However, it may also be envisaged that tool events are registered by the tool 10 and then communicated via wireless transmitter to the cloud server 30 being equipped with a corresponding control device 35 for performing the remaining steps, which would relieve the processing unit 17 of the tool 10 from the computational burden.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method of a device (20, 35) of monitoring events of a tightening tool (10), the method comprising:
registering (S101) tool events occurring during a number of consecutive tightening operations being performed by the tool, the tightening operations being grouped in a plurality of groups;
summing (S102), for each individual tool event type, the number of events occurring in each group;
computing (S103) a cumulative sum of the number of events occurring over the groups for each event type;
computing (S104) a second derivative of the cumulative sum of events occurring for each event type;
rescaling (S105) the computed second derivative such that a more severe event type is given a higher weight than a less severe event type;
computing (S107) an updated wear score, up until a set upper value, when a current value of the rescaled computed second derivate for an event exceeds a first threshold value (S106), by adding the current value of the rescaled computed second derivate to a last computed wear score; and
decrementing (S110) the wear score when the current value of the rescaled computed second derivate for an event falls below a third threshold value (S108) being set to be lower than the first threshold value.

2. The method of claim 1, where the rescaling (S105) is performed by multiplying the computed second derivative for the less severe event type with the first threshold value, and dividing said computed second derivative for the less severe event type with a second threshold value being set to be higher than the first threshold value.

3. The method of claims 1 or 2, wherein when the wear score reaches the upper set value (S111) and the rescaling (S105) the computed second derivative is positive (S112), each addition (S113) is given a lesser weight as compared to the additions (S107) performed when the maximum set value has not been reached.

4. The method of claim 3, wherein when the wear score reaches the upper set value (S111) and the rescaling (S105) the computed second derivative is not positive (S112), the updated wear score is computed (S114) by adding the current value of the rescaled computed second derivate to the last computed wear score.

5. The method of any one of the preceding claims, wherein said third threshold value is configured to be set to be a negative fraction of the first threshold value.

6. The method of claims 1 or 2, wherein the decrementing (S110) of the wear score is performed in fixed steps.

7. The method of any one of the preceding claims, the wear score being decremented to a minimum value of 0.

8. The method of any one of the preceding claims, further comprising providing a tool maintenance alert upon the wear score reaching the set upper value for a certain event type.

9. The method of any one of claims 1-7, further comprising providing a tool maintenance alert upon a combination of the wear scores for different event types reaching the set upper value for a certain event type.

10. The method of any one of the preceding claims, further comprising continuously presenting the current wear score for each individual tool event to an operator of the tool.

11. The method of any one of the preceding claims, further comprising filtering the computed cumulative sum for each event type prior to computing the second derivative.

12. The method of any one of the preceding claims, wherein the wear score initially is set to zero.

13. A computer program (18, 33) comprising computer-executable instructions for causing a device (20, 35) to perform steps recited in any one of claims 1-12 when the computer-executable instructions are executed on a processing unit (17, 32) included in the device (20, 35).

14. A computer program product comprising a computer readable medium (19, 34), the computer readable medium having the computer program (18, 33) according to claim 13 embodied thereon.

15. A device (20, 35) configured to detect that a tightening tool (10) should be subjected to maintenance, the device (20, 35) comprising a processing unit (17, 32) operative to cause the device (20, 35) to:
register (S101) tool events occurring during a number of consecutive tightening operations being performed by the tool, the tightening operations being grouped in a plurality of groups;
sum (S102), for each individual tool event type, the number of events occurring in each group;
compute (S103) a cumulative sum of the number of events occurring over the groups for each event type;
compute (S104) a second derivative of the cumulative sum of events occurring for each event type;
rescale (S105) the computed second derivative such that a more severe event type is given a higher weight than a less severe event type;
compute (S107) an updated wear score, up until a set upper value, when a current value of the rescaled computed second derivate for an event exceeds a first threshold value (S106), by adding the current value of the rescaled computed second derivate to a last computed wear score; and to
decrement (S110) the wear score when the current value of the rescaled computed second derivate for an event falls below a third threshold value (S108) being set to be lower than the first threshold value.
